# EUROPÄISCHE PATENTANMELDUNG

(11) **EP 2 341 322 A1**
(43) Veröffentlichungstag der Anmeldung: **06.07.2011**
(21) Anmeldenummer: 10009823.5
(22) Anmeldetag: 17.09.2010
(51) Int. Cl.: G01F 1/84

(54) **Coriolis-Massedurchflussmessgerät**

(30) Priorität: 29.12.2009 DE 102009060834
(71) Anmelder: Krohne AG, 4019 Basel (CH)
(72) Erfinder: Hussain, Yousif, Weston Favell, Norhthampton, NN3 3DA (GB); Wang, Tao, Rough Common, Canterbury, CT2 9DG (GB)
(74) Vertreter: Gesthuysen, von Rohr & Eggert

(57) **Zusammenfassung**

Beschrieben und dargestellt ist ein Coriolis-Massedurchflussmessgerät mit mindestens einer Messrohranordnung (1) und mindestens einer Halteranordnung (2), wobei die Halteranordnung (2) mindestens einen an der Messrohranordnung (1) befestigten Halter (3) und mindestens einen von dem Halter (2) getragenen Teil einer Aktuatoranordnung (4) und/oder Sensoranordnung (5) zur Schwingungserzeugung und/oder Schwingungserfassung umfasst, wobei die Messrohranordnung (1) zur Schwingung in einer Soll-Schwingungsebene (X-Ebene) anregbar ist.

Es wird ein Coriolis-Massedurchflussmessgerät angegeben, dessen Schwingungseigenschaften zur Steigerung der Qualität der Messergebnisse verbessert sind, indem der Schwerpunkt der Halteranordnung (2) in der Soll-Schwingungsebene liegt.

## Beschreibung

Die Erfindung betrifft ein Coriolis-Massedurchflussmessgerät mit mindestens einer Messrohranordnung und mindestens einer Halteranordnung, wobei die Halteranordnung mindestens einen an der Messrohranordnung befestigten Halter und mindestens einen von dem Halter getragenen Teil einer Aktuatoranordnung und/oder Sensoranordnung zur Schwingungserzeugung und/oder Schwingungserfassung umfasst, wobei die Messrohranordnung zur Schwingung in einer Soll-Schwingungsebene (X-Ebene) anregbar ist.

Massedurchflussmessgeräte, die nach dem Coriolis-Prinzip arbeiten, weisen im Allgemeinen wenigstens eine Aktuatoranordnung auf, mit der die Messrohranordnung zu Schwingungen angeregt wird, sowie üblicherweise zwei Sensoranordnungen, mit denen die erzielte Schwingung oder die erzielten Schwingungen der Messrohranordnung erfasst wird bzw. werden. Die Bestimmung des Massendurchflusses ist dann über die Phasenverschiebung zwischen den von den beiden Sensoranordnungen jeweils erfassten Schwingungen bestimmbar.

Die Aktuatoranordnung und die Sensoranordnung sind meist derart aufgebaut, dass sie beispielsweise einen Permanentmagneten sowie eine Magnetspule aufweisen, um auf elektrischem Wege Schwingungen auf die Messrohranordnung zu übertragen (Kraftwirkung) bzw. Schwingungen der Messrohranordnung zu erfassen. Das Schwingungsverhalten der Messrohranordnung und der Halteranordnung wirkt sich dabei unmittelbar auf die Qualität der Messergebnisse aus, so dass sich beispielsweise Abweichungen der Schwingung der Messrohranordnung von einer SoI1-Schwingungsebene negativ auf die von den Sensoranordnungen erhaltenen Messergebnisse auswirken. Bereits beim Aufprägen einer Schwingung auf die Messrohranordnung können von der Soll-Schwingungsebene abweichende Schwingungsanteile durch die Aktuatoranordnung verursacht werden.

Ausgehend von den bisher im Stand der Technik bekannten Coriolis-Massedurchflussmessgeräten ist es daher die Aufgabe der Erfindung, ein Coriolis-Massedurchflussmessgerät anzugeben, dessen Schwingungseigenschaften zur Steigerung der Qualität der Messergebnisse verbessert sind.

Ausgehend von dem eingangs beschriebenen Coriolis-Massedurchflussmessgerät ist diese Aufgabe dadurch gelöst, dass der Schwerpunkt der Halteranordnung in der Soll-Schwingungsebene liegt.

Bei der Ausgestaltung eines Halters mit den daran befestigten Teilen einer Aktuatoranordnung und/oder Sensoranordnung muss folglich darauf geachtet werden, dass die Halteranordnung derart ausbalanciert ist, dass der Schwerpunkt der Halteranordnung in der Soll-Schwingungsebene - nachfolgend auch als X-Ebene bezeichnet - liegt. Die Soll-Schwingungsebene ist dabei die gewünschte Hauptschwingungsebene der Messrohranordnung, nämlich die Schwingungsebene, in der die Schwingung der Messrohranordnung durch die Aktuatoranordnung hauptsächlich angeregt wird.

Durch konstruktive Einflüsse, beispielsweise dadurch, dass der Schwerpunkt der Halteranordnung nicht in der Soll-Schwingungsebene liegt, entstehen Schwingungsanteile in Nebenrichtungsebenen, die das Messergebnis negativ beeinflussen. Durch einen in der Soll-Schwingungsebene liegenden Schwerpunkt der Halteranordnung wird eine gleichmäßige Schwingung der Messrohranordnung entlang der Messebene unterstützt. Läge der Schwerpunkt außerhalb der Soll-Schwingungsebene, würde durch die Schwingung stets unter anderem ein Torsionsmoment auf die Messrohranordnung einwirken, das auch die Schwingungen an der Sensoranordnung beeinflusst. Da durch die erfindungsgemäße Ausgestaltung, dass der Schwerpunkt bei einer Schwingung auch innerhalb der Soll-Schwingungsebene schwingt, werden Schwingungsanteile in Nebenschwingungsrichtungen vermieden.

Einen wesentlichen Einfluss auf die Lage des Schwerpunktes der Halteranordnung hat die Ausgestaltung des Halters an sich, da der Halter der tragende Teil der Halteranordnung ist und an ihm die Teile der Aktuatoranordnung und/oder der Sensoranordnung befestigt sind. Der Halter bestimmt im Wesentlichen die Geometrie der Halteranordnung. So bestimmt beispielsweise die Länge des Halters den Abstand der Teile der Aktuatoranordnung und/oder der Sensoranordnung, weshalb eine Veränderung der Geometrie des Halters die Lage des Schwerpunktes der Halteranordnung beeinflusst.

"Aktuatoranordnung und/oder Sensoranordnung" bedeutet nicht nur, dass unterschiedliche Bauteile an den Haltern befestigt werden, sondern auch, dass beispielsweise ein und dieselbe Anordnung von Bauteilen, z. B. Spulen und Magnete, als Aktuatoranordnung zur Anregung einer Schwingung der Messrohranordnung und als Sensoranordnung zur Aufnahme der Schwingungen der Messrohranordnung dienen können. Die Schwingung wird dazu beispielsweise mit der als Aktuatoranordnung wirkenden Anordnung angeregt, anschließend wird die Aktuatoranordnung abgeschaltet und die resultierenden Schwingungen der Messrohranordnung durch die nun als Sensoranordnung wirkende Anordnung aufgenommen. Aus den daraus enthaltenen Messergebnissen wird dann beispielsweise der Massendurchfluss durch die Messrohranordnung bestimmt.

Dass der Schwerpunkt der Halteranordnung in der Soll-Schwingungsebene liegt, kann beispielsweise dadurch erreicht werden, dass ein Teilschwerpunkt der Halteranordnung oberhalb der X-Ebene mit einer geringen Masse, aber mit einem langen Hebelarm, beispielsweise durch einen zweiten Teilschwerpunkt unterhalb der X-Ebene mit einem entsprechend kürzeren Hebelarm, aber dafür mit einer höheren Masse schwingungstechnisch ausbalanciert wird, so dass der aus den beiden Teilschwerpunkten gebildete Schwerpunkt der Halteranordnung insgesamt in der Soll-Schwingungsebene liegt. Insbesondere bei unterschiedlichen Massen der Teile der Aktuatoranordnung und/oder der Sensoranordnung ist die geometrisch asymmetrische Ausgestaltung des Halters ein wesentlicher Faktor für die Gewichtsverteilung innerhalb der Halteranordnung.

Gemäß einer bevorzugten Ausgestaltung ist alternativ dazu vorgesehen, dass der erste Teilschwerpunkt des Teils der Halteranordnung, der oberhalb der Soll-Schwingungsebene liegt und der zweite Teilschwerpunkt des Teils der Halteranordnung, der unter der Soll-Schwingungsebene liegt, jeweils spiegelsymmetrisch zur Soll-Schwingungsebene liegen. Diese Teilschwerpunkte der Halteranordnung oberhalb und unterhalb der X-Ebene weisen dafür betragsmäßig einen gleichen Abstand zur X-Ebene auf, so dass der aus den beiden Teilschwerpunkten gebildete Schwerpunkt der Halteranordnung in der Soll-Schwingungsebene liegt. Durch den identischen Abstand der Teilschwerpunkte zu der X-Ebene wird - durch die identischen Hebelarme der Massen - gleichzeitig impliziert, dass die Teilschwerpunkte jeweils auch eine gleiche Masse aufweisen, da ansonsten der Schwerpunkt der Halteranordnung nicht in der Soll-Schwingungsebene liegen könnte.

Dabei ist unter der Soll-Schwingungsebene die für die Messung gewünschte Hauptschwingungsrichtung der Messrohranordnung zu verstehen. Die Messrohranordnung ist dabei ein System aus in Schwingung zu versetzenden durchströmten Elementen und kann insbesondere aus einem einzigen oder auch aus zwei -bevorzugt parallelen - Messrohren bestehen. Bei einem Coriolis-Massedurchflussmessgerät mit einer Messrohranordnung, die lediglich ein einziges Messrohr aufweist, ist die Schwingungsebene die tatsächlich vorliegende und für die Messung notwendige Schwingungsebene der Messrohranordnung.

Bei einem Coriolis-Massedurchflussmessgerät mit einer Messrohranordnung, die mehrere Messrohre umfasst, ist zunächst zu berücksichtigen, dass diese mehreren Messrohre der Messrohranordnung durch den Halter der zugehörigen Halteranordnung mechanisch miteinander gekoppelt sind. Zu unterscheiden ist demzufolge der Fall, dass die Messrohre der Messrohranordnung so angeordnet sind, dass sie in einer gemeinsamen, identischen Ebene Schwingen, die dann ganz zwanglos der Soll-Schwingungsebene entspricht. Wenn die mehreren Messrohre der Messrohranordnung so in dem Halter angeordnet sind, dass ihre Mittelachsen bei bestimmungsgemäßer Anregung in verschiedenen parallelen Ebenen Schwingen, dann ist die Soll-Schwingungsebene eine aus den parallelen Ebenen gemittelte gedachte Schwingungsebene, die parallel zu den tatsächlichen Schwingungsebenen verläuft. Die Ermittlung der Lage der gedachten Soll-Schwingungsebene aus den tatsächlich realisierten Schwingungsebenen kann einfach durch arithmetische Mittelung der Positionen erfolgen oder auch durch gewichtete arithmetische Mittelung, wobei die Lage bzw. Position jedes der mehreren Messrohre mit dem Anteil des jeweiligen Messrohres an dem Gesamtmassedurchfluss gewichtet wird, der in einfachster Annahme dem Verhältnis des jeweiligen Einzelmessrohrquerschnitts zu dem Gesamtströmungsquerschnitt des Coriolis-Massedurchflussmessgeräts entspricht.

Für den Fall der Ausgestaltung eines Coriolis-Massedurchflussmessgeräts mit zwei Messrohranordnungen ist die Soll-Schwingungsebene ähnlich bestimmt. Umfasst jede Messrohranordnung nur jeweils ein Messrohr, verlaufen beide Messrohre üblicherweise parallel zueinander und schwingen in der Ebene gegeneinander, die schon durch die parallelen Mittelachsen der Messrohre definiert ist, wobei diese Ebene dann die Soll-Schwingungsebene ist, Umfasst jede Messrohranordnung zwei Messrohre, wobei die durch die Mittelachsen der Messrohre einer Messrohranordnung definierte Ebene senkrecht auf der bestimmungsgemäßen Schwingungsebene eines jeden Messrohres steht, liegt die Soll-Schwingungsebene gemittelt zwischen den tatsächlichen Schwingungsebenen der beiden Messrohre der Messrohranordnung. Bei einem Coriolis-Massendurchflußmeßgerät mit insgesamt vier Messrohren, deren Mittelachsen in einem Rechteck angeordnet sind, wobei jeweils zwei Messrohre in je einer Messrohranordnung zusammengefasst sind, werden zwei Schwingungsebenen durch die Messrohrmittelachsen von zwei gegenüberliegend schwingenden Messrohren verschiedener Messrohranordnungen definiert, so dass die Soll-Schwingungsebene dann die Schwingungsebene in der Mitte zwischen den beiden tatsächlich realisierten Schwingungsebenen ist.

Gemäß einer bevorzugten Weiterbildung des Coriolis-Massedurchflussmessgeräts ist vorgesehen, dass wenigstens eine erste Messrohranordnung und eine zweite Messrohranordnung umfasst sind, wobei eine erste Halteranordnung wenigstens einen ersten Halter und eine zweite Halteranordnung wenigstens einen zweiten Halter umfasst, wobei der erste Halter an der ersten Messrohranordnung befestigt ist und der zweite Halter an der zweiten Messrohranordnung befestigt ist, und der erste Halter mindestens einen ersten Teil der Aktuatoranordnung und/oder Sensoranordnung trägt und der zweite Halter mindestens einen zweiten Teil der Aktuatoranordnung und/oder einen zweiten Teil der Sensoranordnung trägt, wobei die erste Messrohranordnung und die zweite Messrohranordnung zur Schwingung in einer Soll-Schwingungsebene (X-Ebene) anregbar sind. Die Halter sind dabei vorzugsweise gegenüberliegend an den Messrohranordnungen befestigt, so dass jeweils der erste Teil der Aktuatoranordnung und/oder der erste Teil der Sensoranordnung an einem Halter an einer Messrohranordnung und der zweite Teil einer Aktuatoranordnung und/oder der zweite Teil der Sensoranordnung an einem zweiten Halter an der zweiten Messrohranordnung befestigt ist, so dass die beiden Teile einer Aktuatoranordnung und/oder einer Sensoranordnung zusammenwirken, so dass jeweils eine vollständige Aktuatoranordnung und/oder eine vollständige Sensoranordnung entsteht.

Der erste Teil und der zweite Teil der Aktuatoranordnung und/oder Sensoranordnung sind dabei weiterhin unabhängig voneinander, so dass, wenn die Messrohranordnungen in Schwingung zueinander versetzt werden, die Teile der Aktuatoranordnung und/oder Sensoranordnung die Schwingung aufnehmen können bzw. die Messrohranordnungen zu Schwingungen anregen können.

Damit die Teile der Aktuatoranordnung und/oder Sensoranordnung vorteilhaft zusammenwirken können, ist gemäß einer vorteilhaften Ausgestaltung vorgesehen, dass die erste Messrohranordnung und die zweite Messrohranordnung spiegelsymmetrisch zu einer im Wesentlichen orthogonal zu der Soll-Schwingungsebene (X-Ebene) orientierten Y-Ebene ausgestaltet sind. Die Y-Ebene verläuft folglich zwischen den beiden Messrohranordnungen, so dass die in der Mitte der Strecke zwischen den beiden Messrohrmittelachsen verlaufende Zentralachse in der Y-Ebene liegt. Die beiden Messrohranordnungen sind folglich vollständig symmetrisch zueinander angeordnet, was sich insgesamt positiv auf das Schwingungsverhalten des Coriolis-Massedurchflussmessgeräts auswirkt.

Als besonders vorteilhaft für das Schwingungsverhalten des Coriolis-Massedurchflussmessgeräts hat sich herausgestellt, wenn der erste Teilschwerpunkt der ersten Halteranordnung und der erste Teilschwerpunkt der zweiten Halteranordnung spiegelsynunetrisch zur Y-Ebene liegen und/oder der zweite Teilschwerpunkt der ersten Halteranordnung und der zweite Teilschwerpunkt der zweiten Halteranordnung spiegelsymmetrisch zur Y-Ebene liegen. Diese Ausgestaltung hat den Vorteil, dass sich die Teilschwerpunkte der ersten und der zweiten Halteranordnung schwingungstechnisch ausgleichen, da sie jeweils einen gleichen Abstand zur Y-Ebene aufweisen.

Diese Ausgestaltung ist insbesondere dann von Bedeutung, wenn sich im Verlauf der Schwingung Schwingungsanteile außerhalb der Soll-Schwingungsebene ergeben, die beispielsweise durch eine nicht spiegelsymmetrische Ausgestaltung verstärkt würden, durch die spiegelsymmetrische Ausgestaltung jedoch zuverlässig minimiert werden. Als besonders vorteilhafter Abstand der Teilschwerpunkte von der Y-Ebene hat sich der Abstand herausgestellt, der dem Abstand der Mittelrohrachsen der Messrohre der Messrohranordnungen von der Y-Ebene entspricht, so dass der erste Teilschwerpunkt und der zweite Teilschwerpunkt jeweils im Wesentlichen in einer gemeinsamen Achse mit dem Mittelpunkt des Messrohrleitungsquerschnitts liegen. Für den Fall, dass dieser vorteilhafte Abstand nicht eingehalten werden kann, soll die Abweichung des Abstandes der Teilschwerpunkte von diesem Abstand möglichst gering sein, wobei die Abweichung auch für sämtliche Teilschwerpunkte identisch sein soll.

Eine bezüglich der Schwingungseigenschaften besonders bevorzugte Ausgestaltung eines Coriolis-Massedurchflusstnessgeräts sieht vor, dass der gemeinsame Schwerpunkt der ersten Halteranordnung und der zweiten Halteranordnung in der Y-Ebene liegt. Wenn der gemeinsame Schwerpunkt der beiden Halteranordnungen in der Y-Ebene liegt, liegt er beispielsweise exakt zwischen zwei Messrohranordnungen. Da der Schwerpunkt dabei zusätzlich auch in der X-Ebene liegt, verschiebt sich der Schwerpunkt auch bei schwingender Messrohranordnung nicht, insbesondere wenn zwei Messrohranordnungen gegensinnig zueinander schwingen, so dass sich durch diesen im Wesentlichen ruhenden Schwerpunkt insgesamt ein sehr gleichmäßiges Schwingungsbild ergibt, das sich positiv auf die Messgenauigkeit des erfindungsgemäßen Coriolis-Massedurchflussmessgeräts auswirkt. Der gemeinsame Schwerpunkt wird insgesamt aus den Teilschwerpunkten der Halteranordnungen gebildet. Die Position der Teilschwerpunkte wird dabei durch gezielte Gestaltung der Halter und durch Verlagerung der Gewichte der an den Haltern befestigten Bauteile bestimmt. Auch die Formgebung der Bauteile und die Art der Befestigung an dem Halter sind dabei zusätzlich beeinflussende Größen.

Die Schwerpunkte der Halteranordnungen lassen sich gemäß einer weiteren bevorzugten Ausgestaltung besonders gut dadurch ausbalancieren, dass von einem Halter wenigstens zwei Teile einer Aktuatoranordnung und/oder Sensoranordnung gehalten werden, wobei insbesondere jeweils ein Teil einer Aktuatoranordnung und/oder Sensoranordnung oberhalb der X-Ebene vorgesehen ist und ein zweiter Teil einer Aktuatoranordnung und/oder Sensoranordnung unterhalb der X-Ebene vorgesehen ist. An einem einzigen ersten Halter sind dazu vorzugsweise zwei identische Teile einer Aktuatoranordnung und/oder Sensoranordnung oberhalb und unterhalb der X-Ebene befestigt, so dass sich die Teilschwerpunkte der Halteranordnung durch die gleichmäßige Gewichtsverteilung aufgrund identischer Bauteile im Wesentlichen symmetrisch zur X-Ebene ausbilden. An einem zweiten Halter, der im Wesentlichen dem ersten Halter gegenüberliegend angeordnet ist, sind dabei beispielsweise jeweils die zweiten Teile einer Aktuatoranordnung und/oder Sensoranordnung, sowohl oberhalb als auch unterhalb der X-Ebene, befestigt.

Die an dem ersten Halter befestigen ersten Teile einer Aktuatoranordnung und/oder Sensoranordnung sind jeweils die korrespondierenden Teile zu den zweiten Teilen einer Aktuatoranordnung und/oder Sensoranordnung, die an dem zweiten Halter befestigt sind, so dass sich durch die Teile der Aktuatoranordnung und/oder Sensoranordnung an den beiden Haltern jeweils zwei vollständige Aktuatoranordnungen und/oder Sensoranordnungen zwischen den beiden Haltern, jeweils eine oberhalb und eine unterhalb der X-Ebene ausbilden.

Die zuvor beschriebene Ausgestaltung eignet sich in besonderer Weise für zwei Aktuatoranordnungen, da die Messrohranordnung dadurch gleichmäßig von den oberhalb und unterhalb der Messrohre angeordneten Aktuatoranordnungen angeregt werden, ohne dass beispielsweise Torsionsmomente in den Messrohren entstehen, die sich negativ auf das Schwingungsverhalten auswirken können. Diese Ausgestaltung einer doppelten Aktuatoranordnung und/oder Sensoranordnung kann beispielsweise auch für eine Sensoranordnung vorgesehen sein, so dass sich von den jeweils oberhalb und unterhalb der Messrohre angeordneten Sensoranordnungen zwei unabhängige Messergebnisse in Bezug auf die Schwingung abgreifen lassen, so dass sich zwei voneinander unabhängige Messwerte für die Schwingung bestimmen lassen. Zusätzlich besteht der Vorteil, dass beispielsweise aus den Abweichungen der beiden Messwerte voneinander zum Beispiel auf den Messfehler geschlossen werden kann, wodurch insgesamt die Genauigkeit der Schwingungserfassung gesteigert wird.

Gemäß einer bevorzugten Weiterbildung ist vorgesehen, dass von einem Halter ein Teil einer Aktuatoranordnung und/oder ein Teil einer Sensoranordnung auf einer Seite der X-Ebene gehalten wird, wobei auf der gegenüberliegenden anderen Seite der X-Ebene mindestens ein Ausgleichsgewicht von dem Halter gehalten wird. Durch das Ausgleichsgewicht wird der Teilschwerpunkt der Halteranordnung auf der einen Seite unterhalb der X-Ebene derart beeinflusst, dass er sich symmetrisch zu dem Teilschwerpunkt des Teils der Halteranordnung oberhalb der X-Ebene ausbildet, so dass der Schwerpunkt der Halteranordnung insgesamt in der Soll-Schwingungsebene - der X-Ebene - liegt.

Das Ausgleichsgewicht kann beispielsweise eine der Aktuatoranordnung oder der Sensoranordnung ähnliche oder sogar gleiche Form aufweisen. Diese Ausgestaltung eignet sich in besonderer Weise für die Sensoranordnung, da bei bereits gleichmäßig schwingenden Messrohranordnungen das Abgreifen der Schwingung lediglich auf einer Seite der X-Ebene notwendig ist. Die Sensoranordnung weist durch das Ausgleichsgewicht ein gleichmäßiges Schwingungsbild mit einem wenigstens in der X-Ebene liegenden Halterschwerpunkt auf.

Es hat sich als besonders vorteilhaft herausgestellt, wenn die Halter symmetrisch zur X-Ebene ausgestaltet sind. Dadurch, dass die Halteranordnung gewichtsmäßig durch die Ausgleichsgewichte bzw. die Aktuatoranordnung und/oder Sensoranordnung derart ausbalanciert wird, dass sich der Schwerpunkt der Halteranordnung in der X-Ebene befindet, kann auch der Halter an sich symmetrisch ausgestaltet sein.

Durch einen symmetrisch ausgestalteten Halter weisen die Teile der Aktuatoranordnung und/oder Sensoranordnung bzw. die Ausgleichsgewichte einen gleichen Abstand jeweils zur X-Ebene und insbesondere auch zur Y-Ebene auf, so dass gemäß einer bevorzugten Ausgestaltung vorgesehen ist, dass das Ausgleichsgewicht jeweils ein Gewicht aufweist, dass dem auszugleichenden Gewicht des Halters mit dem zugehörigen Teil einer Aktuatoranordnung oder Sensoranordnung entspricht.

Je nach verwendeter Aktuatoranordnung und/oder Sensoranordnung wird das Gewicht des Ausgleichsgewichts derart angepasst, dass sich der Schwerpunkt der Halteranordnung in der X-Ebene befindet, bevorzugt zusätzlich auch in der Y-Ebene liegt. Das Ausgleichsgewicht muss dazu nicht zwingend eine identische Form zu den Teilen der Aktuatoranordnung und/oder Sensoranordnung aufweisen, sondern muss lediglich derart ausgestaltet sein, dass eine entsprechende Positionierung des Schwerpunkts der Halteranordnung möglich ist.

Um beispielsweise bei der Herstellung eines Coriolis-Massedurchflussmessgeräts auftretende Ungenauigkeiten bezüglich der Position der Teilschwerpunkte flexibel ausgleichen zu können, ist gemäß einer bevorzugten Ausgestaltung vorgesehen, dass der Abstand der Teilschwerpunkte zur Y-Ebene einstellbar ist, insbesondere durch Verschiebung eines Teils der Aktuatoranordnung und/oder eines Teils der Sensoranordnung und/oder eines Ausgleichsgewichts einstellbar ist.

Die die Position der Teilschwerpunkte im Wesentlichen beeinflussenden Bauelemente, nämlich die Aktuatoranordnung, die Sensoranordnung und jeweils die Ausgleichsgewichte, können beispielsweise mit einem Gewinde oder einer Schraubeinrichtung derart in Bezug auf die Y-Ebene positioniert werden, dass sich eine Verschiebung der Teilschwerpunkte ergibt, wodurch insgesamt die einzelnen Teilschwerpunkte der Halteranordnungen aufeinander abgestimmt werden können. Auch wenn sich im laufenden Betrieb, beispielsweise durch Veränderung des Rohrsystems oder durch andere Einflüsse, eine Verschiebung der Teilschwerpunkte ergeben sollte, können diese Ungenauigkeiten mit der Anpassung der Position der einzelnen Bauelemente im Bezug auf die Y-Achse auf die neue Betriebssituation angepasst werden.

Insbesondere bei dünnwandigen Messrohranordnungen können beispielsweise durch die Schwingungsanregung zusätzlich zu den eigentlichen Schwingungen der gesamten Messrohranordnung in einer Soll-Schwingungsebene zusätzlich Schwingungen in dem Querschnitt der Messrohranordnung, also beispielsweise in der Rohrwand eines Messrohres entstehen, weshalb gemäß einer vorteilhaften Weiterbildung vorgesehen ist, dass der Halter die Messrohranordnung jeweils ringförmig umgibt, so dass der Querschnitt der Messrohranordnung versteift wird, wobei insbesondere der Halter über den gesamten Umfang der Messrohranordnung an der Messrohranordnung befestigt ist. Die Halter wirken dabei als versteifende Elemente für die Wände der Messrohranordnung, so dass die Tendenz zu Schwingungen in dem Querschnitt der Messrohranordnung maßgeblich verringert wird.

Üblicherweise sind eine Mehrzahl von Haltern entlang der gesamten Länge einer Messohranordnung vorgesehen, so dass die Messrohranordnung in gleichmäßigen Abständen von den Haltern fixiert wird, wodurch die beschriebenen Schwingungen in dem Querschnitt der Messrohranordnungen zuverlässig verhindert werden. Der Halter ist dazu vorzugsweise über einen gesamten Umfang der Messrohranordnung an der Messrohranordnung befestigt, also beispielsweise mit der Messrohranordnung verlötet oder verschweißt, so dass eine zuverlässige stoffschlüssige Verbindung gegeben ist.

Um bei einer bezüglich ihrer Teilschwerpunkte ausbalancierten Halteranordnung eine Beeinflussung der Schwingungen durch ein Verbiegen der Halteranordnung bzw. ein Schwingen der Halteranordnung in sich zu verhindern, ist gemäß einer vorteilhaften Weiterbildung vorgesehen, dass der Halter derart ausgestaltet ist, dass ein erster Ansatzwinkel α₁ kleiner oder gleich einem zweiten Ansatzwinkel α₂ ist, wobei der erste Ansatzwinkel α₁ und der zweite Ansatzwinkel α₂ eine Erstreckung von Berührungskonturen zwischen einem Haltering und einem Halteteil des Halters bezeichnen, wobei der erste Ansatzwinkel α₁ und der zweite Ansatzwinkel α₂ gemessen werden in einer durch die Berührungskonturen definierten Z-Ebene, ausgehend von der Schnittlinie der Z-Ebene mit einer sowohl senkrecht zur Soll-Schwingungsebene (X-Ebene) als auch zur Z-Ebene und durch den Mittelpunkt des Halterings verlaufenden A-Ebene.

Der Ansatzwinkel α₁ wird zwischen der A-Ebene und der X-Ebene zwischen der A-Ebene und dem Ansatz eines Halteteils an einem Haltering auf einer Befestigungsseite ausgehend von der Messrohrmittelachse bzw. dem Zentrum des Halterings aufgespannt, wobei der zweite Ansatzwinkel α₂ zwischen der A-Ebene und dem Ansatz des Halteoberteils auf der der Befestigungsseite abgewandten Seite des Halters aufgespannt wird. Die Ansatzwinkel erstrecken sich dabei in der Z-Ebene, die jeweils orthogonal zu der X-Ebene und zu der A-Ebene angeordnet ist, wobei die A-Ebene im Wesentlichen parallel zur Y-Ebene angeordnet ist, wobei eine Mittelrohrachse bzw. das Zentrum des Halterings in der A-Ebene liegt. Die A-Ebene ist parallel zu der Y-Ebene verschoben.

Dieser bevorzugte Halter umfasst im Wesentlichen einen zentralen Haltering, an dem an zwei jeweils gegenüberliegenden Seiten ein Halteteil ausgestaltet ist, wobei die Ansätze des Halteteils an dem Haltering jeweils an dem Schnittpunkt der verlängerten Winkelachse mit der Außenkontur des Halterings angeformt sind, wodurch sich eine besondere Steifigkeit des Halters ergibt, die sich positiv auf das Schwingungsverhalten der Halteranordnung insgesamt auswirkt. An dem Haltering ist jeweils an gegenüberliegenden Seiten oben und unten ein Halteteil nach der entsprechenden Vorschrift bezüglich der Berührungskonturen angeformt.

Gemäß einer besonders bevorzugten Ausgestaltung, die eine besonders vorteilhafte Auswirkung auf das Schwingungsverhalten hat, ist vorgesehen, dass die Ansatzwinkel α₁ und α₂ kleiner als 90° sind, insbesondere kleiner als 45°. Gemäß einer weiteren bevorzugten Ausgestaltung hat sich ein positives Schwingungsverhalten des Halters bzw. der Halteranordnung gezeigt, wenn der Ansatzwinkel α₂ etwa 90° beträgt, wobei der Ansatzwinkel α₁ kleiner als 90° ist, insbesondere kleiner als 45° ist. Auch bei dieser Ausgestaltung des Halters hat sich ein besonders vorteilhaftes Schwingungsbild, insbesondere in der Soll-Schwingungsebene, ergeben. Bei dieser Ausgestaltung ist es auch möglich, dass der Haltering des Halters teilweise offen ist, insbesondere wenn die Öffnung im Montagezustand in Richtung einer zweiten Messrohranordnung ausgerichtet ist.

Die zuvor beschriebenen Ausgestaltungen von Coriolis-Massedurchflussmessgeräten lassen sich bevorzugt mit einem Verfahren herstellen, bei dem im Konstruktionsprozess des Coriolis-Massedurchflussmessgeräts im Bereich der Halter jeweils ein rechtwinkeliges Koordinatensystem angelegt wird, dessen X-Achse die Mittelsachsen der Messrohranordnungen im Bereich der Halter orthogonal schneidet und dessen Y-Achse orthogonal zu den Mittelachsen der Messrohranordnungen und durch den Mittelpunkt der Strecke zwischen den Mittelachsen verläuft, wobei die Halteranordnung und/oder die Ausgleichs. gewichte derart ausgelegt werden, dass die Teilschwerpunkte der Teilbereiche einer Halteranordnung, die sich jeweils in einem der vier Quadranten zwischen der Y-Achse und der X-Achse befinden, betragsmäßig die gleichen Ortskoordinaten aufweisen.

Durch ein solches Verfahren kann das Ausbalancieren der Teilschwerpunkte der Halteranordnungen bereits im Konstruktionsprozess erfolgen, so dass sich vorzugsweise der gemeinsame Schwerpunkt der ersten und der zweiten Halteranordnung zwischen den beiden Messrohranordnungen in der X-Ebene und vorzugsweise auch in der Y-Ebene befindet.

Im Einzelnen gibt es nun eine Vielzahl von Möglichkeiten, das erfmdungsgemäße Coriolis-Massedurchflussmessgerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen:
- Fig. 1: ein Ausführungsbeispiel mit zwei Messrohranordnungen für ein Coriolis-Massedurchflussmessgerät mit daran befestigten Halteranordnungen in einer perspektivischen Seitenansicht,
- Fig. 2: ein Ausführungsbeispiel von Messrohranordnungen eines Coriolis-Massedurchflussmessgeräts mit daran befestigten Halteranordnungen in einer Draufsicht und
- Fig. 3: ein Ausführungsbeispiel eines Halters für einen Coriolis-Massedurchflussmessgerät in einer Seitenansicht und in einer perspektivischen Seitenansicht.

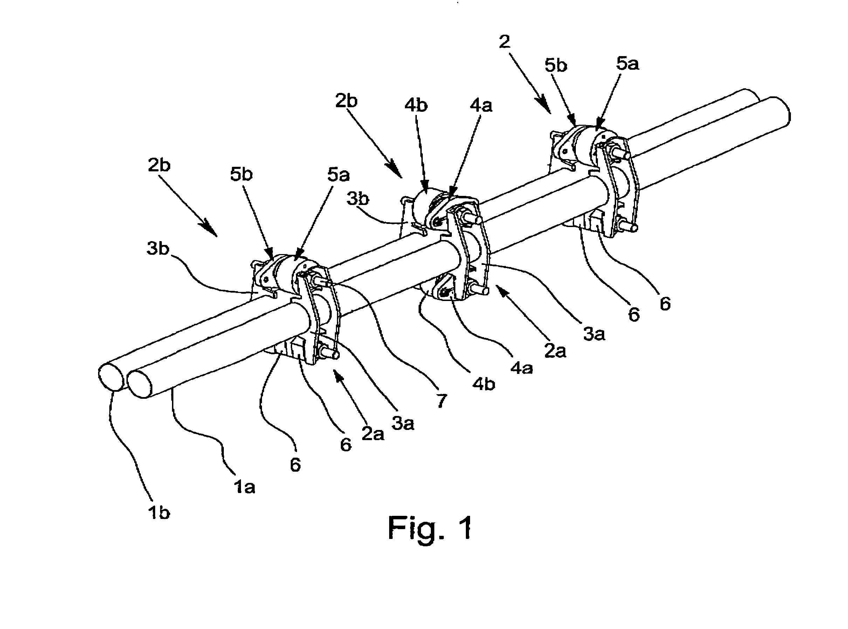

Fig. 1 zeigt eine erste Messrohranordnung 1a und eine zweite Messrohranordnung 1b für ein Coriolis-Massedurchflussmessgerät, wobei die Messrohranordnungen 1a, 1b zueinander parallel angeordnet sind. An jeder der beiden Messrohranordnungen 1a, 1b ist eine Mehrzahl von Halteranordnungen 2a, 2b befestigt, wobei an der ersten Messrohranordnung 1a jeweils eine Mehrzahl von ersten Halteranordnungen 2a und an der zweiten Messrohranordnung 1b jeweils eine Mehrzahl von Halteranordnungen 2b befestigt ist. Jede Halteranordnung 2 besteht aus einem an jeweils einer Messrohranordnung 1 befestigten Halter 3, und einem von dem Halter 3 getragenen Teil einer Aktuatoranordnung 4 bzw. Teil einer Sensoranordnung 5, wobei die Aktuatoranordnung 4 zur Schwingungserzeugung und die Sensoranordnung 5 zur Schwingungserfassung dienen.

Die Aktuatoranordnungen 4 bestehen jeweils aus einem ersten Teil 4a einer Aktuatoranordnung 4 und einem zweiten Teil 4b einer Aktuatoranordnung 4, wobei die Sensoranordnung 5 jeweils aus einem ersten Teil 5a einer Sensoranordnung 5 und einem zweiten Teil 5b einer Sensoranordnung 5 besteht.

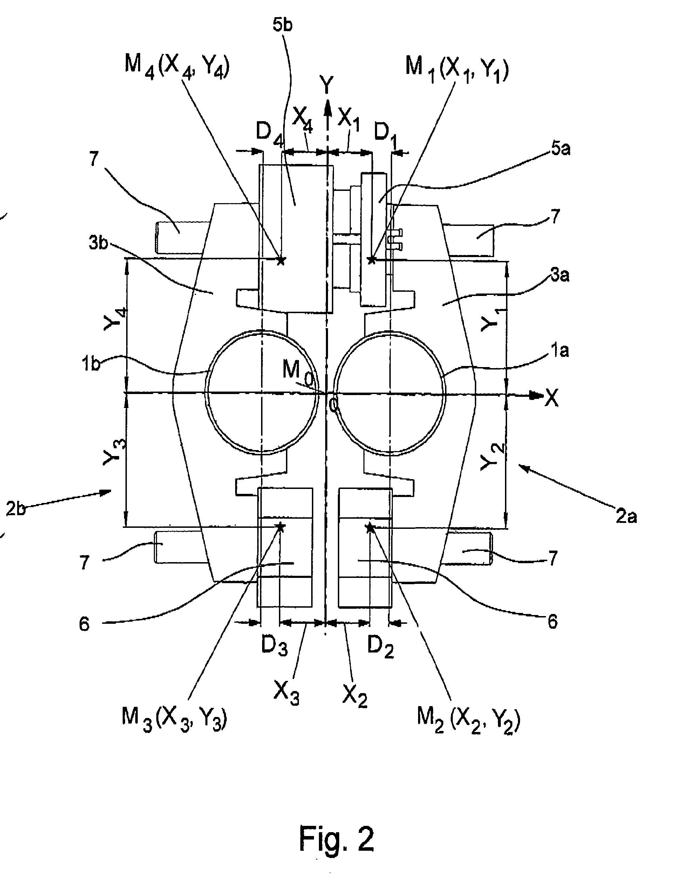

In Fig. 1 mittig dargestellt sind zwei gegenüberliegend angeordnete Halteranordnungen 2, die jeweils mit ihrem Halter 3 an einer Messroburanordnung 1 befestigt sind, wobei jede Halteranordnung 2 jeweils zwei Teile 4a, 4b einer Aktuatoranordnung 4 trägt, so dass oberhalb und unterhalb der Messrohranordnungen 1 zwei symmetrisch angeordnete Aktuatoranordnungen 4 zur Schwingungserzeugung angeordnet sind. Eine erste Halteranordnung 2a trägt folglich zwei erste Teile 4a einer Aktuatoranordnung 44, während eine zweite Halteranordnung 2b jeweils zwei zweite Teile 4b einer Aktuatoranordnung 4 trägt. Mit den daraus gebildeten Aktuatoranordnungen 4 sind die Messrohranordnungen 1 zur Schwingung in einer Soll-Schwingungsebene (X-Ebene), die in Fig. 2 dargestellt ist, anregbar.

In Fig. 1 jeweils rechts und links von den mittig dargestellten Halteranordnungen 2 dargestellt, sind jeweils zwei Halteranordnungen 2 angeordnet, die mit ihren Haltern 3 jeweils an einer der Messrohranordnungen 1 befestigt sind. Dabei trägt jeweils eine erste Halteanordndung 2a einen ersten Teil einer Sensoranordnung 5a und eine zweite Halteranordnung 2b einen zweiten Teil einer Sensoranordnung 5b, so das rechts und links von den Aktuatoranordnungen 4 jeweils eine Sensoranordnung 5 zur Schwingungserfassung angeordnet ist.

Die Schwingungen der Messrohranordnungen 1 sollen hauptsächlich in einer - in Fig. 2 dargestellten - Soll-Schwingungsebene (X-Ebene) erfolgen. Fig. 2 zeigt eine erste Halteranordnung 2a und eine zweite Halteranordnung 2b in einer Draufsicht. Die Halteranordnungen 2a, 2b umfassen jeweils einen an jeweils einer Messrohranordnung 1a, 1b befestigten Halter 3a, 3b, An der ersten Halteranordnung 2a ist ein erster Teil 5a einer Sensoranordnung 5 und an einer zweiten Halteranordnung 2b ein zweiter Teil 5b einer Sensoranordnung 5 befestigt.

Die in Fig. 2 rechts dargestellte erste Halteranordnung 2a weist einen ersten Teilschwerpunkt M₁ oberhalb der X-Ebene und einen zweiten Teilschwerpunkt M₂ unterhalb der X-Ebene auf. Parallel dazu weist die in Fig. 2 links dargestellte zweite Halteranordnung 2b einen ersten Teilschwerpunkt M₄ oberhalb und einen zweiten Teilschwerpunkt M₃ unterhalb der X-Ebene auf. Die X-Ebene verläuft dabei exakt durch die Mittelrohrachsen der Messrohranordnungen 1a, 1b; die Y-Ebene verläuft orthogonal zur X-Ebene exakt zwischen der ersten Messrohranordnung 1a und der zweiten Messrohranordnung 1b, so dass die erste Messrohranordnung 1 a und die zweite Messrohranordnung 1b spiegelsymmetrisch zueinander bezüglich der Y-Ebene angeordnet sind. Die X-Ebene ist die Soll-Schwingungsebene, in der die Messrohranordnungen 1 durch die Aktuatoranordnung 4 zu einer Schwingung angeregt werden.

Der erste Teilschwerpunkt M₁ der - in Fig. 2 rechts dargestellten - ersten Halteranordnung 2a und der erste Teilschwerpunkt M₄ der - in Fig. 2 links dargestellten - zweiten Halteranordnung 2b und auch der zweite Teilschwerpunkt M₂ der ersten Halteranordnung 2a und der zweite Teilschwerpunkt M₃ der zweiten Halteranordnung 2b sind jeweils spiegelsymmetrisch zur Y-Ebene zueinander angeordnet, so dass die Abstände X₁, X₂, X₃, X₄ der Teilschwerpunkte M₁, M₂, M₃, M₄ zur Y-Ebene jeweils identisch sind.

Des Weiteren ist auch der erste Teilschwerpunkt M₁ der ersten Halteranordnung 2a und der zweite Teilschwerpunkt M₂ der ersten Halteranordnung 2a und auch der erste Teilschwerpunkt M₄ der zweiten Halteranordnung 2b und der zweite Teilschwerpunkt M₃ der zweiten Halteranordnung 2b jeweils in Bezug auf die X-Ebene spiegelsymmetrisch zueinander vorgesehen. Daraus folgt, dass auch die Abstände Y₁, Y₂, Y₃, Y₄ der vier Teilschwerpunkte M₁, M₂, M₃, M₄ zur X-Ebene identisch sind.

Die vier Teilschwerpunkte weisen nicht nur gleiche Abstände jeweils zur Y-Ebene und zur X-Ebene auf, sondern weisen auch jeweils eine gleiche Masse auf, so dass der gemeinsame Schwerpunkt M₀ der ersten Halteranordnung 2a und der zweiten Halteranordnung 2b in der X-Ebene und auch in der Y-Ebene liegt, folglich also exakt zwischen der ersten Messrohranordnung 1a und der zweiten Messrohranordnung 1b liegt. Durch eine solche Ausgestaltung liegt der gemeinsame Schwerpunkt M₀ exakt in der Soll-Schwingungsebene (X-Ebene), so dass sich insgesamt ein sehr positives Schwingungsverhalten der an den Messrohranordnungen 1a, 1b befestigten Halteranordnungen 2a, 2b ergibt.

Wie in Fig. 2 dargestellt, wird die Position und das Gewicht der jeweils zweiten Teilschwerpunkte M₂, M₃ durch jeweils ein Ausgleichsgewicht 6 an den Halteranordnungen 2 bestimmt. Die Ausgleichsgewichte 6 sind an den Haltern 3 jeweils unterhalb der X-Ebene befestigt. Da die Halter 3 bei diesem Ausführungsbeispiel spiegelsymmetrisch zur X-Ebene ausgestaltet sind, haben die Ausgleichsgewichte 6 ein Gewicht, das dem gegenüberliegend, auf der anderen Seite der X-Ebene angeordneten ersten Teils 5a der Sensoranordnung 5 oder dem Gewicht des zweiten Teils 5b der Sensoranordnung 5entspricht, so dass sich eine spiegelsymmetrische Anordnung der Teilschwerpunkte M₁, M₂, M₃ und M₄ sowohl bezüglich der X-Ebene als auch bezüglich der Y-Ebene ergibt, insbesondere dann, wenn das Gewicht des ersten Teils 5a der Sensoranordnung 5 dem Gewicht des zweiten Teils 5b der Sensoranordnung 5 entspricht.

Dadurch, dass die Halteranordnungen 2a, 2b bezüglich der Position der Teilschwerpunkte M₁, M₂, M₃, und M₄ ausbalanciert sind, ergibt sich ein sehr vorteilhaftes und gleichmäßiges Schwingungsbild der Messrohranordnungen 1a, 1b in der Soll-Schwingungsebene - der X-Ebene -, ohne dass eine wesentliche Beeinflussung der Schwingungen durch die an den Messrohranordnungen 1 befestigten Halteranordnungen 2 erfolgt. Die Teile der Sensoranordnung 5 und auch die Ausgleichsgewichte 6 sind jeweils mit einer Befestigungsvorrichtung 7 an den Haltern 3 befestigt.

Die Befestigungsvorrichtungen 7 sind dabei derart ausgestaltet, dass sich mit ihnen auf einfache Weise der Abstand X₁, X₂, X₃, X₄ der Teilschwerpunkte M₁, M₂, M₃, M₄ zur Y-Ebene einstellen lässt. Durch diese Einstellbarkeit der Abstände X₁, X₂, X₃, X₄ der Teilschwerpunkte M₁, M₂, M₃, M₄ zur Y-Ebene lassen sich im Laufe des Herstellungsprozess entstehende Toleranzabweichungen und Abweichungen resultierend aus der Einbausituation vorteilhaft ausgleichen. In Bezug auf die Y-Ebene sind die Teilschwerpunkte M₁, M₂, M₃, M₄ dabei vorzugsweise derart positioniert, dass die Abstände der Teilschwerpunkte von den Mittelrohrachsen der Messrohranordnung 1 in X-Richtung D₁, D₂, D₃, D₄ möglichst gering, aber insbesondere für alle vier Teilschwerpunkte M₁, M₂, M₃, M₄ identisch sind.

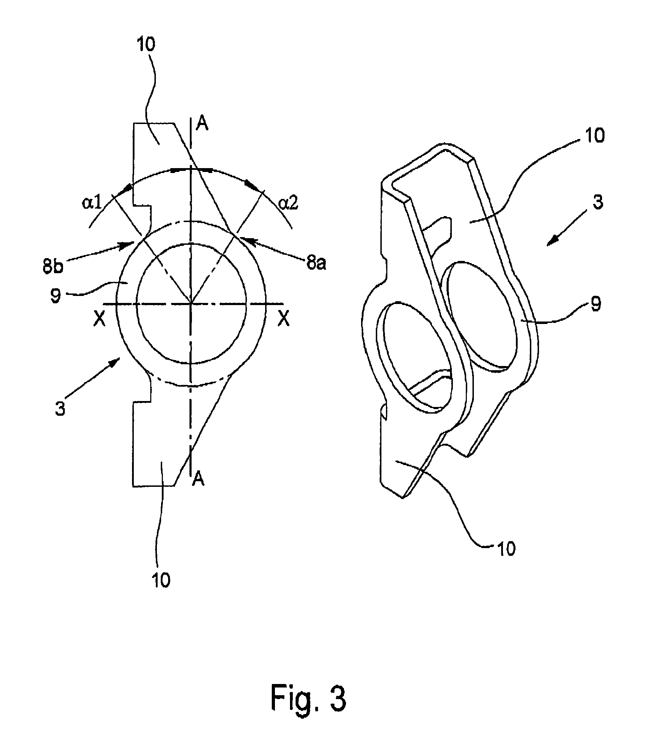

Fig. 3 zeigt ein bevorzugtes Ausführungsbeispiel eines Halters 3, der eine vorteilhafte Steifigkeit aufweist, die sich insbesondere bei einem System mit ausbalancierten Teilschwerpunkten M₁, M₂, M₃, M₄ positiv auf das Schwingungsverhalten der Messrohranordnung 1 auswirkt. Bei diesem Ausführungsbeispiel ist ein Ansatzwinkel α₁ gleich einem Ansatzwinkel α₂, wobei der erste Ansatzwinkel α₁ und der zweite Ansatzwinkel α₂ die Erstreckung von Berührungskonturen 8 zwischen einem Haltering 9 und einem Halterteil 10 des Halters 3 bezeichnen, wobei der erste Ansatzwinkel α₁ und der zweite Ansatzwinkel α₂ gemessen werden in der durch die Berührungskonturen 8 definierten Z-Ebene, ausgehend von der Schnittlinie der Z-Ebene mit einer sowohl senkrecht zur Soll-Schwingungsebene als auch zur Z-Ebene und durch den Mittelpunkt des Halterings 9 verlaufenden A-Ebene,

Mit anderen Worten bezeichnen die Ansatzwinkel α₁ und α₂ jeweils diejenigen Winkel, ausgehend von der Mittelrohrachse einer Messrohranordnung und der A-Ebene, die die Erstreckung eines Halteteils 10 zwischen jeweils einer ersten Berührungskontur 8a und einer zweiten Berührungskontur 8b an dem Haltering 9 beschreiben. Die A-Ebene verläuft parallel zur Y-Ebene, ist zu der Y-Ebene jedoch parallel versetzt, so dass sie durch das Zentrum des Halterings 9 verläuft. Die Z-Ebene ist orthogonal zur A-Ebene und zur X-Ebene.

Bei dem Ausgestaltungsbeispiel gemäß Fig. 3 sind die Ansatzwinkel α₁ und α₂ jeweils etwas kleiner als 45°, wodurch sich insgesamt eine vorteilhafte Steifigkeit des Halters ergibt. Die Halter 3 gemäß der Fig. 2 weisen dabei jeweils einen Ansatzwinkel α₁ auf, der etwas kleiner als 45° ist, wobei der Ansatzwinkel α₂ in etwa 90° beträgt; auch für diese Ausgestaltung hat sich eine vorteilhafte Steifigkeit der Halter 3 im Betrieb gezeigt.

Durch die zuvor beschriebenen Ausgestaltungen erhält der Halter 3 eine vorteilhafte Steifigkeit so dass er sich durch die Schwingungen der Messrohranordnung 1 in der Soll-Schwingungsebene nicht verbiegt oder verformt bzw. in sich schwingt, wodurch die Messergebnisse der an dem Halter 3 befestigten Teile einer Aktuatoranordnung 4 und/oder Sensoranordnung 5 beeinflusst werden würden.

## Patentansprüche

1. Coriolis-Massedurchflussmessgerät mit mindestens einer Messrohranordnung (1) und mindestens einer Halteranordnung (2), wobei die Halteranordnung (2) mindestens einen an der Messrohranordnung (1) befestigten Halter (3) und mindestens einen von dem Halter (3) getragenen Teil einer Aktuatoranordnung (4) und/oder Sensoranordnung (5) zur Schwingungserzeugung und/oder Schwingungserfassung umfasst, wobei die Messrohranordnung (1) zur Schwingung in einer Soll-Schwingungsebene (X-Ebene) anregbar ist,
**dadurch gekennzeichnet,**
**dass** der Schwerpunkt der Halteranordnung (2) in der Soll-Schwingungsebene liegt.

2. Corialis-Massedurchflussmessgerät nach Anspruch 1, **dadurch gekennzeichnet, dass** der erste Teilschwerpunkt (M₁, M₄) des Teils der Halteranordnung (2), der oberhalb der Soll-Schwingungsebene liegt und der zweite Teilschwerpunkt (M₂, M₃) des Teils der Halteranordnung (2), der unter der Soll-Schwingungsebene liegt, spiegelsymmetrisch zur Soll-Schwingungsebene liegen,

3. Coriolis-Massedurchflussmessgerät nach Anspruch 1 oder 2, **dadurch gekennzeichnet, dass** wenigstens eine erste Messrohranordnung (1a) und eine zweite Messrohranordnung (1b) umfasst sind, wobei eine erste Halteranordnung (2a) wenigstens einen ersten Halter (3a) und eine zweite Halteranordnung (2b) wenigstens einen zweiten Halter (3b) umfasst, wobei der erste Halter (3a) an der ersten Messroburanordnung (1a) befestigt ist und der zweite Halter (3b) an der zweiten Messrohranordnung (1b) befestigt ist, und der erste Halter (3a) mindestens einen ersten Teil (4a) der Aktuatoranordnung (4) und/oder einen ersten Teil (5a) der Sensoranordnung (5) trägt und der zweite Halter (3b) mindestens einen zweiten Teil (4b) der Aktuatoranordnung (4) und/oder einen zweiten Teil (5b) der Sensoranordnung (5) trägt, wobei die erste Messrohranordnung (1a) und die zweite Messrohranordnung (1b) zur Schwingung in der Soll-Schwingungsebene (X-Ebene) anregbar sind.

4. Coriolis-Massedurchflussmessgerät nach Anspruch 3, **dadurch gekennzeichnet, dass** die erste Messrohranordnung (1a) und die zweite Messrohranordnung (1b) spiegelsymmetrisch zu einer im Wesentlichen orthogonal zu der Soll-Schwingungsebene (X-Ebene) orientierten Y-Ebene ausgestaltet sind.

5. Coriolis-Massedurchflussmessgerät nach Anspruch 4, **dadurch gekennzeichnet, dass** der erste Teilschwerpunkt (M₁) der ersten Halteranordnung (2a) und der erste Teilschwerpunkt (M₄) der zweiten Halteranordnung (2b) spiegelsymmetrisch zur Y-Ebene liegen und/öder der zweite Teilschwerpunkt (M₂) der ersten Halteranordnung (2a) und der zweite Teilschwerpunkt (M₃) der zweiten Halteranordnung (2b) spiegelsymmetrisch zur Y-Ebene liegen.

6. Coriolis-Massedurchflussmessgerät nach Anspruch 4 oder 5, **dadurch gekennzeichnet, dass** der gemeinsame Schwerpunkt (M₀) der ersten Halteranordnung (2a) und der zweiten Halteranordnung (2b) in der Y-Ebene liegt

7. Coriolis-Massedurchflussmessgerät nach einem der Ansprüche 1 bis 6, **dadurch gekennzeichnet, dass** von einem Halter (3) wenigstens zwei Teile einer Aktuatoranordnung (4a, 4b) und/oder Sensoranordnung (5a, 5b) gehalten werden, wobei insbesondere jeweils ein Teil der Aktuatoranordnung (4a, 4b) und/oder ein Teil der Sensoranordnung (5a, 5b) oberhalb der X-Ebene vorgesehen ist und ein zweiter Teil der Aktuatoranordnung (4a, 4b) und/oder der Sensoranordnung (5a, 5b) unterhalb der Soll-Schwingungsebene (X-Ebene) vorgesehen ist.

8. Coriolis-Massedurchflussmessgerät nach einem der Ansprüche 1 bis 7, **dadurch gekennzeichnet, dass** von einem Halter (3) ein Teil einer Aktuatoranordnung (4a, 4b) und/oder ein Teil einer Sensoranordnung (5a, 5b) auf einer Seite der Soll-Schwingungsebene (X-Ebene) gehalten wird, wobei auf der gegenüberliegenden anderen Seite der Soll-Schwingungsebene (X-Ebene) mindestens ein Ausgleichsgewicht (6) von dem Halter (3) gehalten wird,

9. Coriolis-Massedurchflussmessgerät nach einem der Ansprüche 1 bis 8, **dadurch gekennzeichnet, dass** die Halter (3) symmetrisch zur Soll-Schwingungsebene (X-Ebene) ausgestaltet sind.

10. Coriolis-Massedurchflussmessgerät nach Anspruch 8 oder 9, **dadurch gekennzeichnet, dass** das Ausgleichsgewicht (6) jeweils ein Gewicht aufweist, das dem auszugleichenden Gewicht des Halters (3) mit dem zugehörigen Teil einer Aktuatoranordnung (4a, 4b) und/oder Sensoranordnung (5a, 5b) entspricht.

11. Coriolis-Massedurchflussmessgerät nach einem der Ansprüche 1 bis 10, **dadurch gekennzeichnet, dass** der Abstand (X₁, X₂, X₃, X₄) der Teilschwerpunkte (M₁, M₂, M₃, M₄) zur Y-Ebene einstellbar ist, insbesondere durch Verschiebung eines Teils (4a, 4b) der Aktuatoranordnung (4) und/oder eines Teils (5a, 5b) der Sensoranordnung (5) und/oder eines Ausgleichsgewichts (6) einstellbar ist.

12. Coriolis-Massedurchflussmessgerät nach einem der Ansprüche 1 bis 11, **dadurch gekennzeichnet, dass** der Halter (3) die Messrohranordnung (1) jeweils ringförmig umgibt, so dass der Querschnitt der Messrohranordnung (1) versteift wird, wobei insbesondere der Halter (3) über einen gesamten Umfang der Messrohranordnung (1) an der Messrohranordnung (1) befestigt ist.

13. Coriolis-Massedurchflussmessgerät nach einem der Ansprüche 1 bis 12, **dadurch gekennzeichnet, dass** der Halter (3) derart ausgestaltet ist, dass ein erster Ansatzwinkel (α₁) kleiner oder gleich einem zweiten Ansatzwinkel (α₂) ist, wobei der erste Ansatzwinkel (α₁) und der zweite Ansatzwinkel (α₂) die Erstreckung von Berührungskonturen (8) zwischen einem Haltering (9) und einem Halteteil (10) des Halters (3) bezeichnen, wobei der erste Ansatzwinkel (α₁) und der zweite Ansatzwinkel (α₂) gemessen werden in der durch die Berührungskonturen (8) definierten Z-Ebene, ausgehend von der Schnittlinie der Z-Ebene mit einer sowohl senkrecht zur Soll-Schwingungsebene (X-Ebene) als auch zur Z-Ebene und durch den Mittelpunkt des Halterings (9) verlaufenden A-Ebene.

14. Cariolis-Massedurchflussmessgerät nach Anspruch 13, **dadurch gekennzeichnet, dass** die Ansatzwinkel (α₁) und (α₂) kleiner als 90° sind, insbesondere kleiner als 45° sind.

15. Coriolis-Massedurchflussmessgerät nach Anspruch 13, **dadurch gekennzeichnet, dass** der Ansatzwinkel (α₂) etwa 90° beträgt, wobei der Ansatzwinkel (α₁) kleiner als 90° ist, insbesondere kleiner als 45° ist,
